# EUROPÄISCHE PATENTSCHRIFT

(11) **EP 0 555 536 B1**
(45) Veröffentlichungstag und Bekanntmachung des Hinweises auf die Patenterteilung: **25.01.1995**
(21) Anmeldenummer: 92120051.5
(22) Anmeldetag: 25.11.1992
(51) Int. Cl.: H01J 5/50, F21V 19/02, B01J 19/12

(54) **Tauchlampe für einen photochemischen Reaktor**
Submersible lamp for photochemical reactor
Lampe submersible pour un réacteur photochimique

(30) Priorität: 10.02.1992 DE 4203840
(43) Veröffentlichungstag der Anmeldung: 18.08.1993
(73) Patentinhaber: Heraeus Noblelight GmbH, 63450 Hanau (DE)
(72) Erfinder: Ullrich, Bernt, W-6455 Erlensee (DE)
(74) Vertreter: Kühn, Hans-Christian

(56) Entgegenhaltungen:
- EP-A- 0 466 584
- GB-A- 1 020 934
- GB-A- 2 107 110

## Beschreibung

Die Erfindung betrifft eine Tauchlampe für einen photochemischen Reaktor mit einer Entladungslampe, wobei die Entladungslampe in einem von Inertgas durchströmten Außenkolben eingesetzt ist und einen Lampenkolben mit sich axial gegenüberliegenden, mechanisch stabilen elektrischen Anschlüssen aufweist, von denen mindestens ein Anschluß gleichzeitig als Halterung des Lampenkolbens dient und in einer Fassung des Außenkolbens gehalten und kontaktiert wird, wobei die Entladungslampe über eine weitere Halterung an ihrem anderen Ende gegen eine axiale Verschiebung in dem Außenkolben lösbar gehalten und kontaktiert ist.

Dem Prospekt Heraeus Original Hanau D 310625/2C 9.89/VN PK, der W.C. Heraeus GmbH, ist auf Seite 13 eine Tauchlampe nach dem Aufbausystem mit Hg-Hochdruckstrahler angegeben. Wie der Abb. 8 zu entnehmen ist, ist der Strahler über eine Strahlerhalterung mit Zuleitung im Tauchrohr mittels Schellen und Dichtungen befestigt, wobei sich das Tauchrohr wiederum in einem Kühlrohr mit Schellen und Dichtungen befindet. Das Tauchrohr wird dabei über einen Einlaßstutzen und einen Auslaßstutzen in der Kopfplatte mit einem inerten Gas bespült. Das Kühlrohr bietet die Möglichkeit einer Wasserkühlung zwischen Tauchrohr und Reaktionsgut. Die Verbindung von Kopfplatte, bzw. Tauchlampenkopf mit dem Tauchrohr sowie die Verbindung des Tauchrohres mit dem Kühlrohr, erfolgt über Normflanschverbindungen.

Als problematisch erweist sich bei den bekannten Tauchlampen der Austausch von Strahlerlampen, da hier die mit Quarzrohr ummantelten elektrischen Stromzuleiter an ihren Enden von den Verbindungen zum Strahler gelöst werden müssen und eine erneute Anpassung der Stromzuleiter an das einzubringende Entladungsrohr erforderlich ist. In der Praxis bedeutet dies, daß die bisherigen Stromzuleiter nicht mehr verwendet werden können und durch neue ersetzt werden müssen. Die Schmelzverbindung zwischen Stromzuleiter und Außenanschlüssen der Strahlerelektroden erfordert darüberhinaus besonderes fachmännisches Können. Weiterhin ist die zusätzliche Einbringung von Inertgas-Zufuhrröhren beispielsweise auch in Form von Quarzglasrohren erforderlich. Ein Austausch von Strahlerlampen, wie er sich im Rahmen der Instandsetzung oder aufgrund geänderter Anforderung an Leistung oder Strahlerspektrum ergibt, erfordert somit stets fachmännisches Können und eine Bevorratung der jeweiligen Stromzuleiter und ihrer isolierenden Quarzummantelungen.

Die Erfindung stellt sich die Aufgabe, eine Tauchlampe anzugeben, deren Entladungslampe auf einfache Weise austauschbar ist; darüber hinaus sollen auch verschiedene Strahlerlängen einsetzbar sein. Eine weitere Aufgabe besteht darin, die Zahl der Bauelemente innerhalb des Tauchlampenkolbens zu verringern.

Die Aufgabe wird erfindungsgemäß durch die kennzeichnenden Merkmale des Anspruchs 1 gelöst.

Als vorteilhaft erweist sich der einfache und stabile Aufbau, wobei ein Teil der Stromzuleiter gleichzeitig die Funktion der Inertgaszuführung ausübt.

Ein weiterer Vorteil ist darin zu sehen, daß je nach zu behandelnder Flüssigkeit eine Optimierung der passenden Strahlerlampe durch einfaches Auswechseln mittels Steck-Anschluß möglich ist.

In einer bevorzugten Ausführungsform ist das Innere des Anschutzkopfes in zwei gegeneinander abgedichtete Bereiche unterteilt, von denen ein erster Bereich mit der Inertgaszufuhr und ein zweiter Bereich mit der Inertgasabfuhr verbunden ist; der erste Bereich ist über wenigstens eine der beiden Führungsstangen mit dem Inneren des Außenkolbens im Bereich seines geschlossenen Endes kommunizierend verbunden, d.h. daß eine Gasverbindung gebildet sind.

Diese Ausführungsform erweist sich als vorteilhaft, da die Stromdurchführungen der Strahlerlampe auf diese Weise vor Oxydation sicher geschützt werden können. Als Inertgas dient Stickstoff.

Weitere bevorzugte Ausgestaltungen der Erfindung sind in den Unteransprüchen angegeben.

Im folgenden ist der Gegenstand der Erfindung anhand der Figuren 1a, 1b, 2 und 3 näher erläutert.

Figur 1a zeigt im Längsschnitt eine Tauchlampe mit eingesetzter Strahlerlampe, wobei die vom Anschlußbereich bis zum Ende des Außenkolbens reichenden Führungsstangen erkennbar sind; durch Aufbruch im Bereich der Entladungslampe wurde eine verkürzte Darstellung gewählt.

Figur 1b zeigt einen Querschnitt entlang der Linie A B, gemäß Figur 1a.

Figur 2 zeigt einen ebenfalls verkürzten Längsschnitt senkrecht zu der von den beiden, bis zum Ende des Außenkolbens reichenden Führungsstangen aufgespannten Ebene.

Figur 3 zeigt in einer perspektivischen Darstellung die Halterung und Stromzuführung für die Entladungslampe, jedoch ohne Lampe, ohne den sie umgebenden Außenkolben und ohne Anschlußkopf.

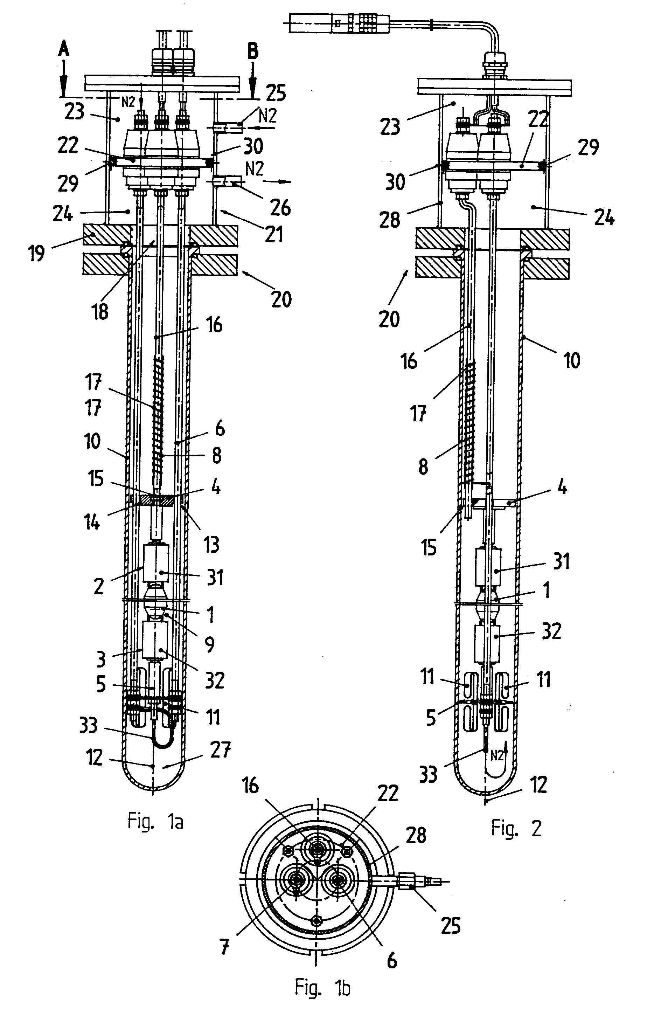

Gemäß Figur 1 wird die Entladungslampe 1 mit ihren sich axial gegenüberliegenden elektrischen Steck-Anschlüssen 2 und 3 mittels einer Fassung 4 und einer als Halterung 5 dienenden Fassung elektrisch kontaktiert und mechanisch festgehalten. Die Fassung 4 ist als Gleitteil ausgebildet, das entlang einer ersten und zweiten Führungsstange 6, 7 verschiebbar angeordnet ist und über den Druck einer von einer zusätzlichen Führungsstange 16 zentrisch gehaltenen Schraubenfeder 8 gegen den elektrischen Anschluß 2 der Entladungslampe 1 gepreßt, wobei der auf der anderen Seite des Lampenkolbens 9 der Lampe 1 befindliche elektrische Steck-Anschluß 3 mittels der als weitere Fassung ausgebildeten Halterung 5 elektrisch kontaktiert und mechanisch gehalten wird. Die Entladungslampe 1 ist dabei gegen den Druck der Schraubenfeder 8 aus dem Eingriff mit Fassung 4 lösbar. Die als weitere Fassung ausgebildete Halterung 5 ist im Bereich der freien Enden der beiden zueinander parallel angeordneten Führungsstangen 6, 7 ortsfest angeordnet, wobei die Halterung mittels am Rand ausgreifender Zentrierelemente 11 ortsfest angeordnet und gegen den Außenkolben 10 abgestützt ist. Die Zentrierung erfolgt im Hinblick auf die Längsachse 12 des Außenkolbens 10.

Die Fassung 4 besitzt Ausnehmungen 13, 14, 15 mittels derer sie entlang der Führungsstange 6, 7 sowie der die Schraubenfeder 8 tragenden zusätzlichen Führungsstange 16 parallel zur Achse 12 verschiebbar angeordnet ist. Die Druckfeder ist mittels Schmelzverbindung (Verschweißung) 17 mechanisch fest und elektrisch leitend auf der zusätzlichen Führungsstange 16 fixiert, wobei ein sicherer Abstand der Schraubenfeder 8 zu den Führungsstangen 6, 7, die mit dem elektrischen Gegenpol verbunden sind, gewährleistet ist. Die Führungsstangen 6, 7 und 16 sind durch eine Öffnung 18 in einer Platte 19 des Anschlußbereiches 20 von Anschlußkopf 21 geführt, wobei der Anschlußkopf zum dichtenden Anschluß des Photoreaktor-Gehäuses dient, das hier zwecks besserer Übersicht nicht dargestellt ist. Das Innere des Anschlußkopfes 21 ist mittels Zwischenplatte 22 in einen Inertgaszufuhrbereich 23 und Inertgasabfuhrbereich 24 unterteilt, wobei die zugehörigen Gasanschlüsse mit den Bezugsziffern 25, 26 bezeichnet sind. Die ersten und zweiten Führungsstangen 6, 7 sind rohrförmig ausgebildet und an ihren oberen und unteren Enden jeweils geöffnet, so daß eine direkte Gasverbindung zwischen dem Inertgaszufuhrbereich 23 und dem Endbereich 27 des Außenkolbens 10 besteht. Die Rückführung des Inertgases erfolgt durch die Öffnung 18 in Platte 19 des Anschlußbereiches 20. Die zusätzliche Führungsstange 16 ist ebenfalls rohrförmig ausgebildet, doch ist eines ihres Enden verschlossen, um eine gegenläufige Gasströmung in den mittleren Bereich des Außenkolbens zu vermeiden. Der Stickstoffkreislauf erfolgt entlang der mit N₂ bezeichneten Strömungspfeile.

Der Bereich des Querschnitts entlang der Linie A B der Figur 1a ist in Figur 1b näher erläutert. In Figur 1 b ist die Zwischenplatte 22 des Anschlußkopfes erkennbar, wobei ebenfalls die Stromanschlüsse der ersten und zweiten Führungsstangen 6, 7 sowie der zusätzlichen Führungsstange 16 erkennbar sind. Die Zwischenplatte 22 ist gegenüber der rohrförmigen Außenwand 28 des Anschlußkopfes 21 mittels umlaufender Dichtung 29 in Form eines in einer Nut 30 liegenden umlaufenden O-Ringes 29 abgedichtet, um eine Vermischung der eintretenden mit den austretenden Inertgasen zu vermeiden.

Gemäß Figur 2 ist die exzentrische Lage der zusätzliche Führungsstange 16 mit der aufgebrachten Schraubenfeder 8 erkennbar, welche gegenüber der Achse 12 des Außenkolbens eine seitliche Versetzung aufweist; um eine ungleichmäßige Belastung der Fassung 4 zu vermeiden, ist diese mittels Ihrer Ausnehmungen 13,14, 15 durch die in Figur 1a sichtbaren Führungsstangen 6, 7, 16 entlang der Achse 12 geführt, wobei in der vorliegenden Figur lediglich die Führungsstangen 6 und 16 erkennbar sind. Wie bereits anhand der Figur 1a zu sehen ist, sind die Anschluß-Sockel 31, 32 in der Fassung 4 beziehungsweise der Halterung 5 eingesetzt, wobei gemäß Figur 1a der elektrische Anschluß des Sockels 32 mittels einer zusätzlichen elektrischen Leitung 33 erfolgt. Es ist jedoch auch möglich die Halterung 5 mit einem separat anzuschließenden Sockel zu versehen.

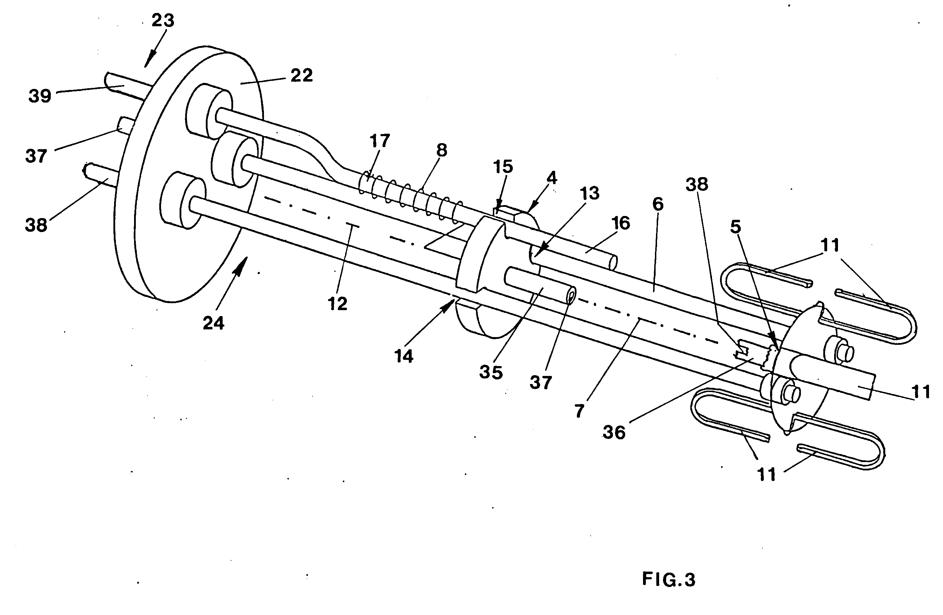

Gemäß Figur 3 ist der zum Einschub in das Außenrohr der Tauchlampe vorgesehenen Teil der erfindungsgemäßen Anordnung vor dem Einsetzen einer Entladungslampe näher erläutert. Die mit stiftförmigen Anschlüssen 2, 3 versehenen Sockel 31, 32 der in Figur 1a und 2 dargestellten Entladungslampe werden gemäß Figur 3 von den hülsenförmigen Kontaktelementen 35, 36 der Fassung 4 und der Halterung 5 aufgenommen. Anhand dieser Figur sind die Ausnehmungen 13, 14, 15 der Fassung 4 erkennbar, mit deren Hilfe sie entlang der Achse 12 verschiebbar ist, um auf einfache Weise eine Anpassung an verschiedenartige Längen der einzusetzenden Strahler vorzunehmen. Die hülsenförmigen Kontaktelemente 35, 36 weisen jeweils hohlzylindrische Ausnehmungen 37, 38 auf, von denen hier jedoch perspektivisch gesehen lediglich die Ausnehmung 37 erkennbar ist, während Ausnehmung 38 durch das teilweise aufgebrochen dargestellte Kontaktelement 36 erkennbar ist. Die als Druckfeder wirkende Schraubenfeder 8 ist hier, wie bereits vorstehend beschrieben mittels Schweißverbindung 17 auf der Führungsstange 16 mit einem Ende befestigt, während das andere Ende der Schraubenfeder 8 elektrisch und mechanisch mit Fassung 4 verbunden ist, wobei eine elektrische Verbindung zum hülsenförmigen Kontaktelement 35 besteht. Die Halterung 5 ist an ihren Außenseiten mittels schellenförmiger Befestigungsmittel an den Führungsstangen 6, 7 elektrisch leitend befestigt, wobei das hülsenförmige Kontaktelement 36 ebenfalls mechanisch fest und elektrisch leitend mit der Halterung 5 verbunden ist. Zur Zentrierung der Halterung 5 weist diese sich zur Kolbeninnenwand des hier nicht dargestellten Außenkolbens erstreckende Stützelemente 11 auf, welche für einen ortsfesten Halt der Halterung 5 sorgen;zur besseren Erkennbarkeit des Kontaktelements 36 ist eines der Stützelemente 11 im aufgebrochenen Zustand dargestellt.

Die Führungsstangen 6, 7, 16 sind in der Zwischenplatte 22 gasdicht verschraubt, wobei die Stromzuführung über die Anschlußleitungen 37, 38, 39 erfolgt und die Anschlußleitungen 37, 38 das gleiche Potential führen. Die rohrförmigen Führungsstangen 6, 7 sind an ihren Enden jeweils offen, so daß das Inertgas auf dem Inertgaszufuhrbereich 23 durch die Zwischenplatte 22 in den Endbereich 27 des hier nicht dargestellten Außenkolbens strömen kann. Die Rückführung des Inertgases erfolgt entlang der Achse 12, der Fassung 4 zu dem vor der Zwischenplatte 22 liegenden Inertgasabfuhrbereich 24.

Gemäß einer weiteren, hier nicht dargestellten Ausführungsform ist es möglich, die Sockel der Entladungslampe mit buchsen- oder hülsenförmigen Kontaktelementen zu versehen, in welche Kontakt-Stifte mechanisch lösbar eingreifen, die mit den Fassungen bzw. Halterungen fest verbunden sind. Die Steck-Anschlüsse sind daher sowohl durch stiftförmig als auch durch buchsenförmig ausgebildete Sockel der Entladungslampe realisierbar.

Bei einer Verwendung einer Gleichstrom-Entladungslampe ist der eine Sockel mit einem stiftförmigen Kontaktelement (Anodenseite) und der andere Sockel mit einem buchsenförmigen Kontaktelement versehen.

## Patentansprüche

1. Tauchlampe für einen photochemischen Reaktor mit einer Entladungslampe (1), wobei die Entladungslampe in einem von Inertgas durchströmten Außenkolben (10) eingesetzt ist und einen Lampenkolben (9) mit sich axial gegenüberliegenden, mechanisch stabilen elektrischen Anschlüssen (2,3) aufweist, von denen mindestens ein Anschluß (3) gleichzeitig als Halterung des Lampenkolbens dient und in einer Fassung (5) des Außenkolbens gehalten und kontaktiert wird, wobei die Entladungslampe über eine weitere Halterung (4) an ihrem anderen Ende gegen eine axiale Verschiebung in dem Außenkolben lösbar gehalten und kontaktiert ist, dadurch gekennzeichnet, daß die mindestens eine Fassung (4) als Gleitteil ausgebildet ist, das in den mindestens einen elektrischen Anschluß (2) des Lampenkolbens (1) eingreift und entlang mindestens einer ersten Führungsstange (6, 7) unter Druck einer Feder (8) in Eingriff gehalten und gegen den Druck der Feder aus dem Eingriff mit dem Anschluß (2) lösbar ist.

2. Tauchlampe nach Anspruch 1, dadurch gekennzeichnet, daß die weitere Halterung (5) als weitere Fassung ausgebildet ist.

3. Tauchlampe nach Anspruch 1 oder 2, dadurch gekennzeichnet, daß zwei Führungsstangen (6, 7) parallel zueinander im Abstand verlaufend vorgesehen sind, an denen das Gleitteil geführt ist.

4. Tauchlampe nach einem der Ansprüche 1 bis 3, dadurch gekennzeichnet, daß die weitere Halterung (5) an wenigstens einer der Führungsstange(6, 7) ortsfest angeordnet ist.

5. Tauchlampe nach einem der Ansprüche 1 bis 4, dadurch gekennzeichnet, daß eine dritte Führungsstange (16) parallel mit Abstand zu der ersten Führungsstange (6, 7) angeordnet ist, die an ihrem einen Ende die weitere Halterung trägt.

6. Tauchlampe nach Anspruch 5, dadurch gekennzeichnet, daß die dritte Führungsstange (16) einen Stromleiter bildet.

7. Tauchlampe nach Anspruch 5 oder 6, dadurch gekennzeichnet, daß das Gleitteil (4) einen Isolierkörper aufweist, mit dem es an der ersten (und den weiteren) Führungsstange(n) geführt ist.

8. Tauchlampe nach Anspruch 6, dadurch gekennzeichnet, daß die Feder (8) eine Schrauben-Feder ist, die auf die dritte Führungsstange (16) aufgesteckt ist.

9. Tauchlampe nach einem der Ansprüche 1 bis 8, dadurch gekennzeichnet, daß die Feder (8) mit dem einen Ende mit der ersten Fassung (4) elektrisch verbunden ist und so einen Stromzuleiter bildet.

10. Tauchlampe nach Anspruch 9, dadurch gekennzeichnet, daß die Schrauben-Feder (8) mit ihrem anderen Ende an der Führungsstange (16) elektrisch und mechanisch fest verbunden ist.

11. Tauchlampe nach einem der Ansprüche 1 bis 10, dadurch gekennzeichnet, daß die erste und/oder zweite Führungsstange (6, 7) als Stromzuleiter ausgebildet ist.

12. Tauchlampe nach einem der Ansprüche 1 bis 11, dadurch gekennzeichnet, daß die Führungsstange (6, 7) im Bereich des einen Endes des Außenkolbens (10) in einem Anschlußkopf (21) gehalten sind.

13. Tauchlampe nach Anspruch 12, dadurch gekennzeichnet, daß der Außenkolben (10) am anderen Ende (27) verschlossen ist.

14. Tauchlampe nach einem der Ansprüche 1 bis 13, dadurch gekennzeichnet, daß die erste und zweite Führungsstange(n) (6, 7) als Rohr(e) ausgebildet ist (sind) und eine Gaszu- oder Abführung bildet (bilden).

15. Tauchlampe nach Anspruch 12 oder 13, dadurch gekennzeichnet, daß das Innere des Anschlußkopfes (21) in zwei gegeneinander abgedichtete Bereiche unterteilt ist, wobei ein erster Bereich (23) mit der Inertgaszufuhr (25) und ein zweiter Bereich (24) mit der Inertgasabfuhr (26) verbunden ist, wobei der erste Bereich wenigstens über die erste Führungsstange (6, 7) mit dem Inneren des Außenkolbens (10) eine Gasverbindung bildet und der zweite Bereich über das vom Anschlußkopf (21) gehaltene Ende des Außenkolbens (10), eine Gasverbindung mit dem Inneren des Außenkolbens bildet.

16. Tauchlampe nach einem der Ansprüche 13 bis 15, dadurch gekennzeichnet, daß wenigstens die erste Führungsstange (6, 7) eine Inertgaszufuhr bis in den End-Bereich (27) des geschlossenen Endes vom Außenkolben (10) aufweist.

17. Tauchlampe nach einem der Ansprüche 1 bis 16, dadurch gekennzeichnet, daß die Anschlüsse (2, 3) als Steck-Anschlüsse ausgebildet sind.

## Claims

1. A submersible lamp for a photochemical reactor with a discharge lamp (1), in which the discharge lamp is inserted in an outer bulb (10) having inert gas flowing through it, and has a lamp bulb (9) with mechanically stable electric connections (2,3) lying axially opposite each other, at least one connection (3) of which serves at the same time as a mounting of the lamp bulb and is held and contacted in a socket (5) of the outer bulb, in which the discharge lamp is held releasably by means of a further mounting (4) at its other end against an axial displacement in the outer bulb, and is contacted, characterised in that the at least one socket (4) is constructed as a sliding part, which engages in the at least one electric connection (2) of the lamp bulb (1) and is held in engagement along at least a first guide rod (6,7) under the pressure of a spring (8) and is able to be released out of engagement with the connection (2) against the pressure of the spring.

2. A submersible lamp according to Claim 1, characterised in that the further mounting (5) is constructed as a further socket.

3. A submersible lamp according to Claim 1 or 2, characterised in that two guide rods (6,7) are provided running parallel to each other at a distance, on which the sliding part is guided.

4. A submersible lamp according to one of Claims 1 to 3, characterised in that the further mounting (5) is fixedly arranged on at least one of the guide rods (6,7).

5. A submersible lamp according to one of Claims 1 to 4, characterised in that a third guide rod (16) is arranged parallel to and at a distance from the first guide rod (6,7), which carries at one of its ends the further mounting.

6. A submersible lamp according to Claim 5, characterised in that the third guide rod (16) forms a current conductor.

7. A submersible lamp according to Claim 5 or 6, characterised in that the sliding part (4) has an insulating body, with which it is guided on the first (and the further) guide rod(s).

8. A submersible lamp according to Claim 6, characterised in that the spring (8) is a helical spring, which is placed onto the third guide rod (16).

9. A submersible lamp according to one of Claims 1 to 8, characterised in that the spring (8) is electrically connected by one end with the first socket (4) and thus forms a current supply line.

10. A submersible lamp according to Claim 9, characterised in that the helical spring (8) is electrically and mechanically fixedly connected by its other end to the guide rod (16).

11. A submersible lamp according to one of Claims 1 to 10, characterised in that the first and/or second guide rod (6,7) is constructed as a current supply line.

12. A submersible lamp according to one of Claims 1 to 11, characterised in that the guide rod (6,7) is held in the region of one end of the outer bulb (10) in a connection head (21).

13. A submersible lamp according to Claim 12, characterised in that the outer bulb (10) is closed at the other end (27).

14. A submersible lamp according to one of Claims 1 to 13, characterised in that the first and second guide rod(s) (6,7) is (are) constructed as a tube (tubes) and forms (form) a gas supply or removal arrangement.

15. A submersible lamp according to Claim 12 or 13, characterised in that the interior of the connection head (21) is divided into two regions which are sealed with respect to each other, in which a first region (23) is connected with the inert gas supply (25) and a second region (24) is connected with the inert gas removal (26), in which the first region forms a gas connection at least via the first guide rod (6, 7) with the interior of the outer bulb (10) and the second region forms a gas connection with the interior of the outer bulb via the end of the outer bulb (10) held by the connection head (21).

16. A submersible lamp according to one of Claims 13 to 15, characterised in that at least the first guide rod (6, 7) has an inert gas supply into the end region (27) of the closed end of the outer bulb (10).

17. A submersible lamp according to one of Claims 1 to 16, characterised in that the connections (2,3) are constructed as plug connections.

## Revendications

1. Lampe submersible pour un réacteur photochimique, comportant une lampe à décharge (1) qui est mise en place dans une ampoule extérieure (10) traversée par du gaz inerte et qui présente une ampoule de lampe (9) avec des raccordements (23) électriques, mécaniquement stables, situés axialement en vis-à-vis, dont au moins un raccordement (3) sert en même temps de monture de l'ampoule de lampe et est tenu et contacté dans une douille (5) de l'ampoule extérieure, la lampe à décharge étant tenue de façon détachable et contactée via une autre monture (4) sur son autre extrémité à l'encontre un déplacement axial dans l'ampoule extérieure, caractérisée en ce qu'au moins ladite une douille (4) est réalisée sous la forme d'un élément de coulissement qui s'engage dans ledit au moins un raccord électrique (2) de l'ampoule de lampe (1) et qui est tenu en engagement au moins le long d'une première tige de guidage (6, 7) sous la pression d'un ressort (8), et qui est détachable à l'encontre de la pression du ressort hors de l'engagement avec le raccord (2).

2. Lampe submersible selon la revendication 1, caractérisée en ce que l'autre monture (5) est réalisée sous la forme d'une autre douille.

3. Lampe submersible selon l'une ou l'autre des revendications 1 et 2, caractérisée en ce que deux tiges de guidage (6, 7) sont prévues, parallèlement l'une à l'autre et s'étendant à distance l'une par rapport à l'autre, contre lesquelles est guidé l'élément de coulissement.

4. Lampe submersible selon l'une quelconque des revendications 1 à 3, caractérisée en ce que l'autre monture (5) est agencée de façon fixe sur au moins une des tiges de guidage (6, 7).

5. Lampe submersible selon l'une quelconque des revendications 1 à 4, caractérisée en ce qu'une troisième tige de guidage (16) est agencée parallèlement et à distance par rapport à la première tige de guidage (6, 7), et en ce que cette troisième tige de guidage (16) porte l'autre monture à l'une de ses extrémités.

6. Lampe submersible selon la revendication 5, caractérisée en ce que la troisième tige de guidage (16) forme un conducteur de courant.

7. Lampe submersible selon l'une ou l'autre des revendications 5 et 6, caractérisée en ce que l'élément de coulissement (4) présente un corps isolant par lequel il est guidé sur la première (et les autres) tige(s) de guidage.

8. Lampe submersible selon la revendication 6, caractérisée en ce que le ressort (8) est un ressort hélicoïdal qui est enfilé sur la troisième tige de guidage (16).

9. Lampe submersible selon l'une quelconque des revendications 1 à 8, caractérisée en ce que le ressort (8) est électriquement relié par une extrémité à la première douille (4) et forme ainsi une amenée de courant.

10. Lampe submersible selon la revendication 9, caractérisée en ce que le ressort hélicoïdal (8) est relié de façon électrique est mécaniquement ferme par son autre extrémité à la tige de guidage (16).

11. Lampe submersible selon l'une quelconque des revendications 1 à 10, caractérisée en ce que la première et/ou la seconde tige de guidage (6, 7) est réalisée sous la forme d'une amenée de courant.

12. Lampe submersible selon l'une quelconque des revendications 1 à 11, caractérisée en ce que les tiges de guidage (6, 7) sont tenues dans la région de l'une des extrémités de l'ampoule extérieure (10) dans une tête de raccordement (21).

13. Lampe submersible selon la revendication 12, caractérisée en ce que l'ampoule extérieure (10) est fermée à l'autre extrémité (27).

14. Lampe submersible selon l'une quelconque des revendications 1 à 13, caractérisée en ce que la première et la seconde tige de guidage (6, 7) sont réalisées sous la forme de tubes et forment une entrée ou une sortie de gaz.

15. Lampe submersible selon l'une ou l'autre des revendications 12 et 13, caractérisée en ce que l'intérieur de la tête de raccordement (21) est divisé en deux régions étanchées l'une par rapport à l'autre, une première région (23) étant reliée à l'amenée de gaz inerte (25) et une seconde région (24) étant reliée à la sortie de gaz inerte (26), la première région formant via au moins la première tige de guidage (6, 7) une liaison de gaz avec l'intérieur de l'ampoule extérieure (10), et la seconde région formant via l'extrémité de l'ampoule extérieure (10) retenue par la tête de raccordement (21) une liaison de gaz avec l'intérieur de l'ampoule extérieure.

16. Lampe submersible selon l'une quelconque des revendications 13 à 15, caractérisée en ce qu'au moins la première tige de guidage (6, 7) présente une amenée de gaz inerte jusqu'à la région finale (27) de l'extrémité fermée de l'ampoule extérieure (10).

17. Lampe submersible selon l'une quelconque des revendications 1 à 16, caractérisée en ce que les raccords (2, 3) sont réalisés sous la forme de raccords enfichables.
